# EUROPEAN PATENT SPECIFICATION

(11) **EP 3 427 124 B1**
(45) Date of publication and mention of the grant of the patent: **04.08.2021**
(21) Application number: 16893721.7
(22) Date of filing: 09.03.2016
(51) Int. Cl.: G06F 1/26, G06F 1/24, G06F 1/16, H02J 7/00

(54) **COMPUTING DEVICES, POWER SUPPLY DEVICES, METHODS FOR CONTROLLING A COMPUTING DEVICE, AND METHODS FOR CONTROLLING A POWER SUPPLY DEVICE**
RECHNERVORRICHTUNGEN, STROMVERSORGUNGSVORRICHTUNGEN, VERFAHREN ZUR STEUERUNG EINER RECHNERVORRICHTUNG UND VERFAHREN ZUR STEUERUNG EINER STROMVERSORGUNGSVORRICHTUNG
DISPOSITIFS INFORMATIQUES, DISPOSITIFS D'ALIMENTATION, PROCÉDÉ DE COMMANDE D'UN DISPOSITIF INFORMATIQUE ET PROCÉDÉ DE COMMANDE D'UN DISPOSITIF D'ALIMENTATION

(43) Date of publication of application: 16.01.2019
(73) Proprietor: Razer (Asia-Pacific) Pte. Ltd., Singapore 469029 (SG)
(72) Inventor: LIEN, Jian Yao, Singapore 469029 (SG)
(74) Representative: Viering, Jentschura & Partner mbB Patent- und Rechtsanwälte
(86) International application number: PCT/SG2016/050110
(87) International publication number: WO 2017/155462

(56) References cited:
- US-A1- 2005 007 711
- US-A1- 2005 007 711
- US-A1- 2006 128 319
- US-A1- 2010 277 224
- US-A1- 2013 009 698
- US-A1- 2014 162 496
- US-A1- 2015 263 460

## Description

### Technical Field

Various embodiments generally relate to computing devices, power supply devices, methods for controlling a computing device, and methods for controlling a power supply device.

### Background

A forced shutdown function or a force reset function is very commonly found on smart electronic devices that are running complex algorithms. However, in commonly used devices, complex user interaction may be required to trigger such a forced shutdown function or forced reset function. Thus, there may be a need for improved devices.

### Summary of the Invention

The invention is as set out in the independent device claims 1 and 7 and independent method claims 9 and 14. Any disclosed embodiment not covered by the claims, is not part of the invention.

According to various embodiments, a computing device may be provided. The computing device may include: a battery; a power supply connector; a connection determination circuit configured to determine an input connected to the power supply connector; a charging circuit configured to charge the battery if the connection determination circuit determines a first input connected to the power supply connector; and an exception circuit configured to instruct the computing device to perform exception processing if the connection determination circuit determines a second input connected to the power supply connector.

According to various embodiments, a power supply device may be provided. The power supply device may include: a power output connector; and a switch configured to switch between a first state in which the power output connector outputs an output for charging a computing device and a second state in which the power output connector outputs an output for initiating exception processing in the computing device.

According to various embodiments, a method for controlling a computing device may be provided. The method may include: determining an input connected to a power supply connector of the computing device; charging a battery a first input connected to the power supply connector is determined; and performing exception processing if a second input connected to the power supply connector is determined.

According to various embodiments, a method for controlling a power supply device may be provided. The method may include switching, using a switch, between a first state in which a power output connector of the power supply device outputs an output for charging a computing device and a second state in which the power output connector outputs an output for initiating exception processing in the computing device.

Related prior art is disclosed in US2010/277224 and US2005/007711.

### Brief Description of the Drawings

In the drawings, like reference characters generally refer to the same parts throughout the different views. The drawings are not necessarily to scale, emphasis instead generally being placed upon illustrating the principles of the invention. The dimensions of the various features or elements may be arbitrarily expanded or reduced for clarity. In the following description, various embodiments of the invention are described with reference to the following drawings, in which:
FIG. 1A shows a computing device according to various embodiments;
FIG. 1B shows a computing device according to various embodiments;
FIG. 1C shows a power supply device according to various embodiments;
FIG. ID shows a flow diagram illustrating a method for controlling a computing device;
FIG. IE shows a flow diagram illustrating a method for controlling a power supply device;
FIG. 2 shows an illustration of a system with a device and a charging connector according to various embodiments; and
FIG. 3 shows a device according to various embodiments.

### Detailed Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, and logical changes may be made without departing from the scope of the invention. The various embodiments are not necessarily mutually exclusive, as some embodiments can be combined with one or more other embodiments to form new embodiments.

In this context, the computing device as described in this description may include a memory which is for example used in the processing carried out in the computing device. In this context, the power supply device as described in this description may include a memory which is for example used in the processing carried out in the power supply device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In an embodiment, a "circuit" may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions which will be described in more detail below may also be understood as a "circuit" in accordance with an alternative embodiment.

In the specification the term "comprising" shall be understood to have a broad meaning similar to the term "including" and will be understood to imply the inclusion of a stated integer or step or group of integers or steps but not the exclusion of any other integer or step or group of integers or steps. This definition also applies to variations on the term "comprising" such as "comprise" and "comprises".

The reference to any prior art in this specification is not, and should not be taken as an acknowledgement or any form of suggestion that the referenced prior art forms part of the common general knowledge in Australia (or any other country).

In order that the invention may be readily understood and put into practical effect, particular embodiments will now be described by way of examples and not limitations, and with reference to the figures.

Various embodiments are provided for devices, and various embodiments are provided for methods. It will be understood that basic properties of the devices also hold for the methods and vice versa. Therefore, for sake of brevity, duplicate description of such properties may be omitted.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

The term "coupled" (or "connected") herein may be understood as electrically coupled or as mechanically coupled, for example attached or fixed or attached, or just in contact without any fixation, and it will be understood that both direct coupling or indirect coupling (in other words: coupling without direct contact) may be provided.

A forced shutdown function or a force reset function is very commonly found on smart electronic devices that are running complex algorithms. However, in commonly used devices, complex user interaction may be required to trigger such a forced shutdown function or forced reset function. According to various embodiments, improved devices may be provided. According to various embodiments, forced shutdown/ reset functions may be provided on a wearable (in other words: on a wearable device).

According to various embodiments, a reverse voltage forced shutdown/reset function on a two contact (for example two pin) charging port for wearables may be provided.

Various embodiments may provide a forced shutdown/reset function on wearables, such as the Nabu X, for example by running a reverse voltage through charging contacts (for example charging pins) which are normally used for recharging, without any user input interface (e.g. without any push button). Such embodiments may be suited for button-less wearables (in other words: wearables that have no buttons and switches) that require frequent firmware (FW) updates which a failed update may put the device into a hang state. This may improve user experience as such a function (or circuit) may empower the user to perform a forced shutdown/reset (for example directly) on the device.

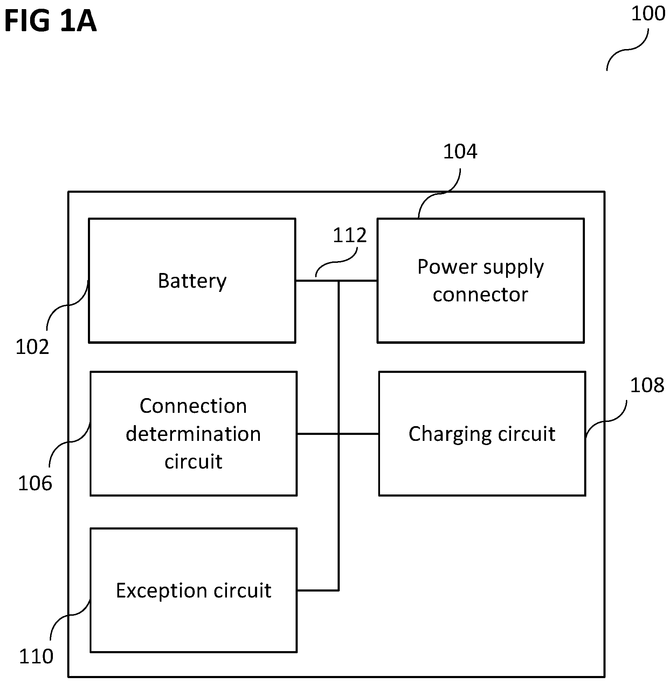

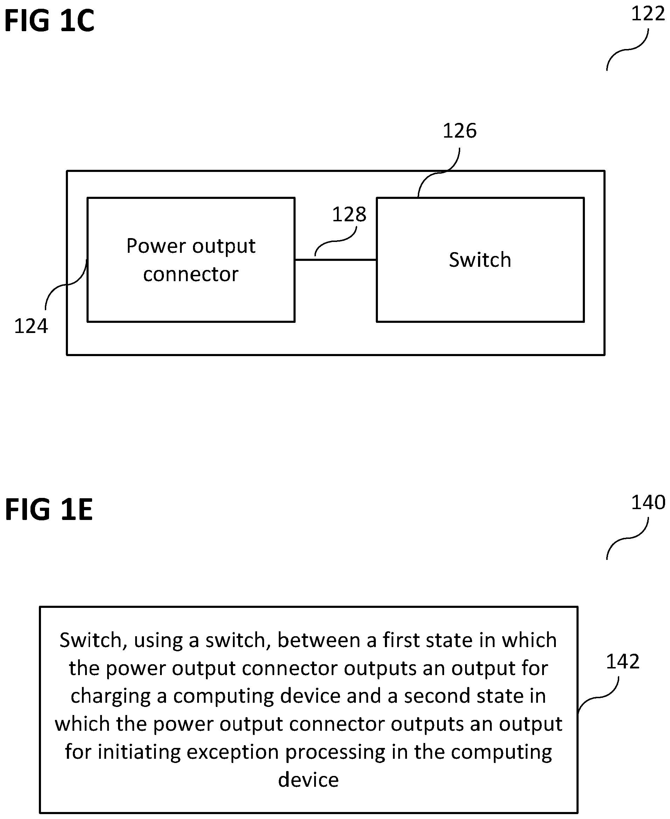

FIG. 1A shows a computing device 100 (for example a wearable, in other words: a wearable device) according to various embodiments. The computing device 100 may include a battery 102. The computing device 100 may further include a power supply connector 104 (which for example may be configured to receive power supply from an external source, for example from a power supply device like illustrated in FIG. 1C). The computing device 100 may further include a connection determination circuit 106 configured to determine an input connected to the power supply connector. The computing device 100 may further include a charging circuit 108 configured to charge the battery 102 if the connection determination circuit determines a first input connected to the power supply connector. The computing device 100 may further include an exception circuit 110 configured to instruct the computing device 100 to perform exception processing if the connection determination circuit determines a second input connected to the power supply connector . The battery 102, the power supply connector 104, the connection determination circuit 106, the charging circuit 108, and the exception circuit 110 may be coupled with each other, like indicated by lines 112, for example electrically coupled, for example using a line or a cable, and/ or mechanically coupled.

In other words, the computing device 100 may perform charging or an exception processing, based on the input provided to the power supply connector 104.

According to various embodiments, the connection determination circuit 106 may include or may be a voltage polarity determination circuit (not shown in FIG. 1A) configured to determine a polarity of a power supply connected to the power supply connector 104. According to various embodiments, the first input may include or may be a power supply of a first polarity. According to various embodiments, the second input may include or may be a power supply of a second polarity. In other words, the charging circuit 108 may be configured to charge the battery 102 if the voltage polarity determination circuit determines a first polarity of the power supply, and the exception circuit 110 may be configured to instruct the computing device 100 to perform exception processing if the voltage polarity determination circuit determines a second polarity of the power supply.

According to various embodiments, the first polarity may be inverted compared to the second polarity (in other words: may be opposing to the second polarity).

According to various embodiments, the first polarity of the power supply may include or may be a plus pole of the power supply provided to the first contact and a negative pole of the power supply provided to the second contact.

According to various embodiments, the second polarity of the power supply may include or may be a negative pole of the power supply provided to the first contact and a plus pole of the power supply provided to the second contact.

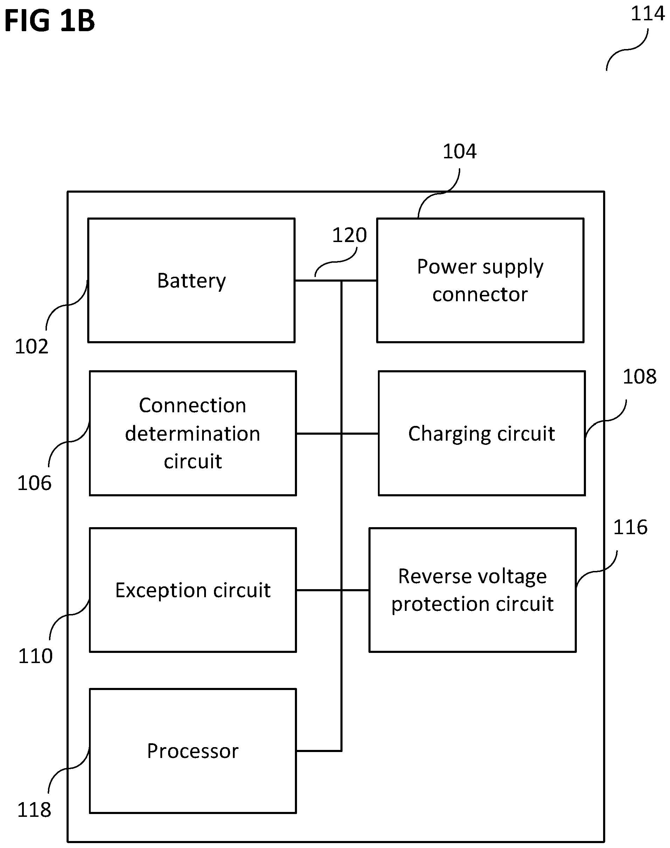

FIG. 1B shows a computing device 114 (for example a wearable, in other words: a wearable device) according to various embodiments. The computing device 114 may, similar to the computing device 100 of FIG. 1A, include a battery 102. The computing device 114 may, similar to the computing device 100 of FIG. 1A, further include a power supply connector 104. The computing device 114 may, similar to the computing device 100 of FIG. 1A, further include a connection determination circuit 106 configured to determine a polarity of the power supply. The computing device 114 may, similar to the computing device 100 of FIG. 1A, further include a charging circuit 108 configured to charge the battery 102 if the voltage polarity determination circuit 106 determines a first polarity of the power supply. The computing device 114 may, similar to the computing device 100 of FIG. 1A, further include an exception circuit 110 configured to instruct the computing device 114 to perform exception processing if the voltage polarity determination circuit 106 determines a second polarity of the power supply. The computing device 114 may further include a reverse voltage protection circuit 116, like will be described in more detail below. The computing device 114 may further include a processor 118, like will be described in more detail below. The battery 102, the power supply connector 104, the voltage polarity determination circuit 106, the charging circuit 108, the exception circuit 110, the reverse voltage protection circuit 116, and the processor 118 may be coupled with each other, like indicated by lines 120, for example electrically coupled, for example using a line or a cable, and/ or mechanically coupled.

According to various embodiments, the reverse voltage protection circuit 116 may be configured to protect the computing device 114 from damage due to a voltage of the second polarity.

According to various embodiments, the connection determination circuit 106 may include or may be a short circuit determination circuit (not shown in FIG. 1B) configured to determine whether a short circuit is provided at the power supply connector 104. According to various embodiments, the first input may include or may be an input different from a short circuit. According to various embodiments, the second input may include or may be a short circuit. In other words, the charging circuit 108 may be configured to charge the battery 102 if the short circuit determination circuit determines that a voltage different from a short circuit is provided at the power supply connector 104, and the exception circuit 110 may be configured to instruct the computing device 100 to perform exception processing if the short circuit determination circuit determines that a short circuit is provided at the power supply connector 104.

According to various embodiments, the exception processing may include or may be or may be included in shutting down the computing device 100.

According to various embodiments, the exception processing may include or may be or may be included in restarting the computing device.

According to various embodiments, the power supply connector 104 may include or may be or may be included in a plurality of contacts.

According to various embodiments, the power supply connector 104 may include or may be or may be included in a first contact and a second contact.

According to various embodiments, the exception circuit 110 may include a delay circuit configured to delay the exception processing by a pre-determined amount of time.

According to various embodiments, the exception processing may include or may be or may be included in a reset of the processor 118.

FIG. 1C shows a power supply device 122 according to various embodiments. The power supply device 122 may include a power output connector 124. The power supply device 122 may further include a switch 126 (for example a mechanical switch or for example an electronic switch) configured to switch between a first state in which the power output connector 124 outputs an output for charging a computing device and a second state in which the power output connector 124 outputs an output for initiating exception processing in the computing device. The power output connector 124 and the switch 126 may be coupled with each other, like indicated by line 128, for example electrically coupled, for example using a line or a cable, and/ or mechanically coupled.

According to various embodiments, the power output connector 124 may be configured to output a voltage of a first polarity in the first state and to output a voltage of a second polarity in the second state.

According to various embodiments, the power output connector 124 may include or may be or may be included in a first contact and a second contact.

According to various embodiments, the voltage of the first polarity may include or may be a plus pole at the first contact and a negative pole at the second contact.

According to various embodiments, the voltage of the second polarity may include or may be a negative pole at the first contact and a negative pole at the second contact.

According to various embodiments, the power output connector 124 may be configured to output a predetermined voltage in the first state and to output a short circuit in the second state.

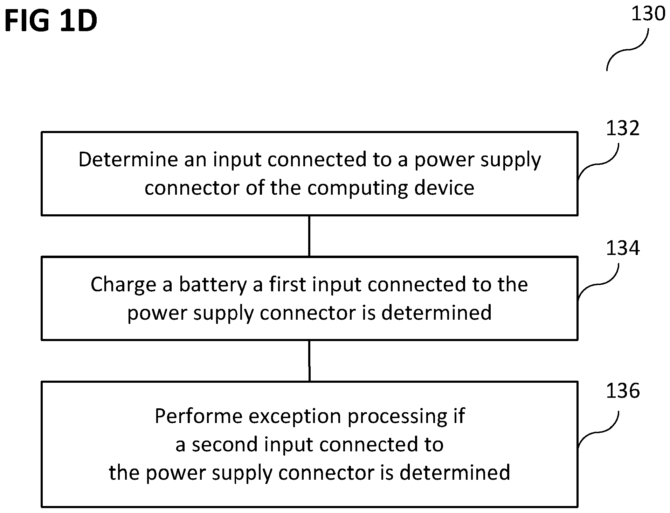

FIG. 1D shows a flow diagram 130 illustrating a method for controlling a computing device. In 132, an input connected to a power supply connector of the computing device may be determined. In 134, a battery of the computing device may be charged if a first input connected to the power supply connector is determined. In 136, exception processing may be performed if a second input connected to the power supply connector is determined.

According to various embodiments, determining the input may include or may be determining a polarity of a power supply connected to the power supply connector. According to various embodiments, the first input may include or may be a power supply of a first polarity. According to various embodiments, the second input may include or may be a power supply of a second polarity.

According to various embodiments, the first polarity may be inverted compared to the second polarity.

According to various embodiments, the method may further include protecting the computing device from damage due to a voltage of the second polarity.

According to various embodiments, determining the input may include or may be determining whether a short circuit is provided at the power supply connector. According to various embodiments, the first input may include or may be an input different from a short circuit. According to various embodiments, the second input may include or may be a short circuit.

According to various embodiments, the exception processing may include or may be or may be included in shutting down the computing device.

According to various embodiments, the exception processing may include or may be or may be included in restarting the computing device.

According to various embodiments, the power supply connector may include or may be or may be included in a plurality of contacts.

According to various embodiments, the power supply connector may include or may be or may be included in a first contact and a second contact.

According to various embodiments, the first polarity of the power supply may include or may be a plus pole of the power supply provided to the first contact and a negative pole of the power supply provided to the second contact.

According to various embodiments, the second polarity of the power supply may include or may be a negative pole of the power supply provided to the first contact and a plus pole of the power supply provided to the second contact.

According to various embodiments, the exception processing may be carried out after a delay of a pre-determined amount of time.

According to various embodiments, the exception processing may include or may be or may be included in a reset of a processor of the computing device.

FIG. IE shows a flow diagram 140 illustrating a method for controlling a power supply device. In 142, it may be switched, for example using a switch on the power supply device, between a first state in which a power output connector of the power supply device outputs an output for charging a computing device and a second state in which the power output connector outputs an output for initiating exception processing in the computing device.

According to various embodiments, the power output connector may output a voltage of a first polarity in the first state and may output a voltage of a second polarity in the second state

According to various embodiments, the power output connector may include or may be or may be included in a first contact and a second contact.

According to various embodiments, the voltage of the first polarity may include or may be a plus pole at the first contact and a negative pole at the second contact.

According to various embodiments, the voltage of the second polarity may include or may be a negative pole at the first contact and a negative pole at the second contact.

According to various embodiments, the power output connector may output a predetermined voltage in the first state and may output a short circuit in the second state.

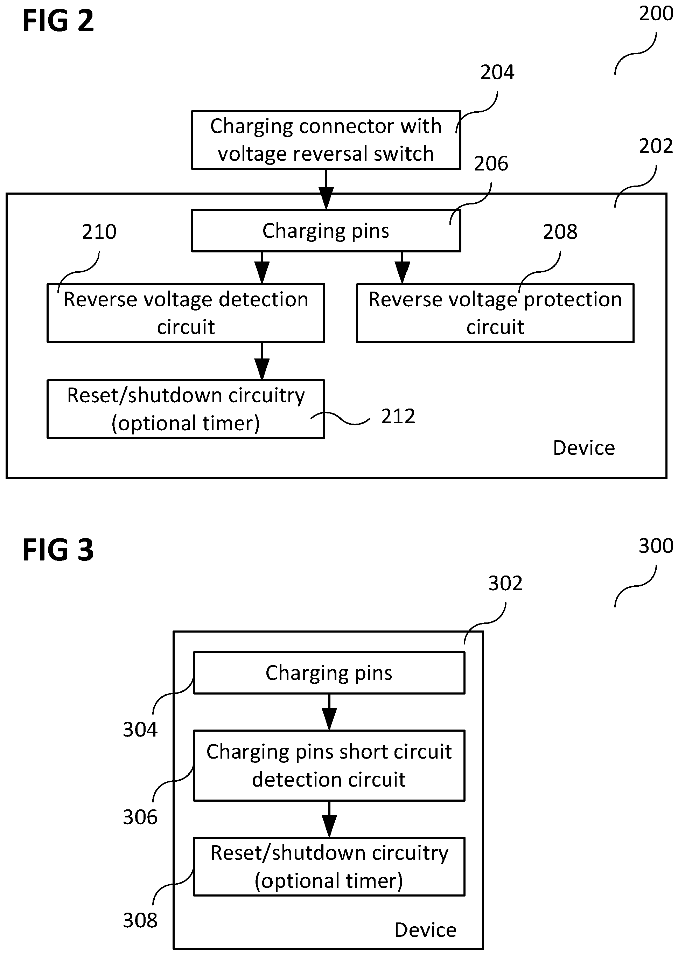

FIG. 2 shows an illustration 200 of a system with a device 202 (for example a computing device like illustrated in FIG. 1A or like illustrated in FIG. 1B) and a charging connector 204 (for example a power supply device like illustrated in FIG. 1C) according to various embodiments.

According to various embodiments, a circuitry may be provided to allow the same contact pins that are used for charging to perform (or to trigger or to initiate or to instruct or to start) a forced shutdown or reset on a main circuit board of the device 202. A reverse voltage may be applied to charging pins 206 of the device to achieve a forced shutdown on the main circuit board. The circuitry (for example reverse voltage detection circuit 210 and reset/ shutdown circuit 212) may be further paired with a delay timer reset IC (integrated circuit) to achieve delayed timing reset. A charging cable with a built in voltage reversal switch may provide the reverse voltage to trigger the forced shutdown/reset function. The device 202 may further include a reverse voltage protection circuit 208.

According to various embodiments, a wearable device may be connected to a charging cable (for example live charging cable) with a built-in voltage reversal momentary switch in order to perform a forced shutdown/reset action.

According to various embodiments, a voltage reversal switch may be provided (for example on the charging cable), and when the voltage reversal switch is depressed, the following actions may be performed:
1. The "reverse voltage" protection circuit may kick in to protect the main circuitry from reversed voltage damage.
2. The "reverse voltage" detection circuit may activate the reset/shutdown circuitry.
3. The device may then go into reset/shutdown immediately or in the case of the usage of a reset/shutdown timer, go into reset/shutdown after time out.

According to various embodiments, a short pins forced shutdown/reset function on a two-pin charging port for wearables (in other words: wearable devices) may be provided.

According to various embodiments, circuitry may be provided to allow the same contact pins that are used for charging to perform a forced shutdown or reset on the main circuit board of the wearable device. This may be achieved by shorting the charging pins. The circuitry may be further paired with a delay timer reset IC to provide delayed timing RESET.

To perform a reset, the charging pins may be shorted with a conductive material (e.g. a pair of stainless steel tweezers) or a specially built charging cable with a momentarily push switch that disconnects the device's charging pins from the charging power source and then shorts the charging pins. The device may then go into reset/shutdown immediately or in the case of the usage of a reset/shutdown timer, go into reset/shutdown after time out.

FIG. 3 shows an illustration 300 of a device 302 according to various embodiments. The device 302 may include charging pins 304, a charging pins short circuit detection circuit 306, and a reset/ shutdown circuitry 308 (which may include a timer).

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims.

## Claims

1. A computing device (100) comprising:
a battery (102);
a power supply connector (104) comprising a first contact and a second contact;
a connection determination circuit (106) configured to determine an input connected to the power supply connector (104);
a charging circuit (108) configured to charge the battery (102) if the connection determination circuit (106) determines a first input connected to the power supply connector (104); and
an exception circuit (110) configured to instruct the computing device (100) to perform exception processing if the connection determination circuit (106) determines a second input connected to the power supply connector (104);
wherein the first input is from a first input group and is a voltage for charging the battery (102); and
wherein the second input is from a second input group and is a short circuit caused by a conductive member arranged between the first contact and the second contact.

2. The computing device (100) of claim 1,
wherein the connection determination circuit (106) comprises a voltage polarity determination circuit configured to determine a polarity of a power supply connected to the power supply connector (104);
wherein the first input group further comprises a power supply of a first polarity and the second input group further comprises a power supply of a second polarity;
wherein the first polarity is inverted compared to the second polarity;
wherein the first polarity of the power supply comprises a plus pole of the power supply provided to a first contact and a negative pole of the power supply provided to a second contact; and
wherein the second polarity of the power supply comprises a negative pole of the power supply provided to the first contact and a plus pole of the power supply provided to the second contact.

3. The computing device (100) of claim 2, further comprising:
a reverse voltage protection circuit (116) configured to protect the computing device (100) from damage due to a voltage of the second polarity.

4. The computing device (100) of any one of claims 1 to 3,
wherein the exception processing comprises shutting down the computing device (100) or restarting the computing device (100); and
wherein optionally the exception circuit (110) comprises a delay circuit configured to delay the exception processing by a pre-determined amount of time.

5. The computing device (100) of any one of claims 1 to 4,
wherein the power supply connector (104) comprises a plurality of contacts.

6. The computing device (100) of any one of claims 1 to 5, further comprising:
a processor (118);
wherein the exception processing comprises a reset of the processor (118).

7. A power supply device (122) comprising:
a power output connector (124) connectable to charging pins of a computing device (100); and
a switch (126) configured to switch between a first state, from a first state group, in which the power output connector connects a power source to charging pins of the computing device (100) for charging the computing device (100) and a second state, from a second state group, in which the switch (126) disconnects the power output connector (124) from the charging pins and shorts the charging pins for initiating exception processing in the computing device (100);
wherein the switch (126) comprises a conductive member, wherein the switch (126) shorts the charging pins by arranging the conductive member between the charging pins.

8. The power supply device (122) of claim 7,
wherein the power output connector (124) is configured to output a voltage of a first polarity in a further state from the first state group and to output a voltage of a second polarity in a further state from the second state group;
wherein the power output connector (124) comprises a first contact and a second contact;
wherein the voltage of the first polarity comprises a plus pole at the first contact and a negative pole at the second contact; and
wherein the voltage of the second polarity comprises a negative pole at the first contact and a negative pole at the second contact.

9. A method for controlling a computing device, the method comprising:
determining an input connected to a power supply connector of the computing device (132), wherein the power supply connector comprises a first contact and a second contact;
charging the battery if a first input connected to the power supply connector is determined (134);
performing exception processing if a second input connected to the power supply connector is determined (136);
wherein the first input is from a first input group and is a voltage for charging the battery; and
wherein the second input is from a second input group and is a short circuit between the first contact and the second contact; and
providing the second input by arranging a conductive member between the first contact and the second contact.

10. The method of claim 9,
wherein determining the input comprises determining a polarity of a power supply connected to the power supply connector;
wherein the first input group further comprises a power supply of a first polarity and the second input group further comprises a power supply of a second polarity;
wherein the first polarity is inverted compared to the second polarity;
wherein the first polarity of the power supply comprises a plus pole of the power supply provided to the first contact and a negative pole of the power supply provided to the second contact; and
wherein the second polarity of the power supply comprises a negative pole of the power supply provided to the first contact and a plus pole of the power supply provided to the second contact.

11. The method of claim 10, further comprising:
protecting the computing device from damage due to a voltage of the second polarity.

12. The method of any one of claims 9 to 11,
wherein the exception processing comprises shutting down the computing device or restarting the computing device;
wherein optionally the exception processing is carried out after a delay of a pre-determined amount of time.

13. The method of any one of claims 9 to 12,
wherein the exception processing comprises a reset of a processor of the computing device.

14. A method for controlling a power supply device, the method comprising:
switching, using a switch, between a first state, from a first state group, in which a power output connector of the power supply device connects a power source to charging pins of a computing device for charging the computing device and a second state, from a second state group, in which the switch disconnects the power output connector from the charging pins and shorts the charging pins with a conductive member of the switch for initiating exception processing in the computing device.

15. The method of claim 14,
wherein the power output connector outputs a voltage of a first polarity in a further state from the first state group and outputs a voltage of a second polarity in a further state from the second state group;
wherein the power output connector comprises a first contact and a second contact;
wherein the voltage of the first polarity comprises a plus pole at the first contact and a negative pole at the second contact; and
wherein the voltage of the second polarity comprises a negative pole at the first contact and a negative pole at the second contact.

## Patentansprüche

1. Eine Computervorrichtung (100), umfassend:
eine Batterie (102);
einen Stromversorgungsstecker (104) umfassend einen ersten Kontakt und einen zweiten Kontakt;
eine Verbindungsbestimmungsschaltung (106), die konfiguriert ist, um eine Eingabe zu bestimmen, die mit dem Stromversorgungsstecker (104) verbunden ist;
eine Ladeschaltung (108), die zum Laden der Batterie (102) konfiguriert ist, wenn die Verbindungsbestimmungsschaltung (106) eine erste Eingabe bestimmt, die mit dem Stromversorgungsstecker (104) verbunden ist; und
eine Ausnahmeschaltung (110), die konfiguriert ist, um die Computervorrichtung (100) anzuweisen, eine Ausnahmeverarbeitung durchzuführen, wenn die Verbindungsbestimmungsschaltung (106) eine zweite Eingabe bestimmt, die mit dem Stromversorgungsstecker (104) verbunden ist;
wobei die erste Eingabe von einer ersten Eingabegruppe stammt und eine Spannung zum Laden der Batterie (102) ist; und
wobei die zweite Eingabe von einer zweiten Eingabegruppe stammt und ein Kurzschluss ist, der durch ein leitendes Element verursacht wird, das zwischen dem ersten Kontakt und dem zweiten Kontakt angeordnet ist.

2. Die Computervorrichtung (100) nach Anspruch 1,
wobei die Verbindungsbestimmungsschaltung (106) eine Spannungspolaritätsbestimmungsschaltung enthält, die konfiguriert ist, um eine Polarität einer Stromversorgung zu bestimmen, die mit dem Stromversorgungsstecker (104) verbunden ist;
wobei die erste Eingabegruppe ferner eine Stromversorgung mit einer ersten Polarität enthält und die zweite Eingabegruppe ferner eine Stromversorgung mit einer zweiten Polarität enthält;
wobei die erste Polarität verglichen mit der zweiten Polarität invertiert ist;
wobei die erste Polarität der Stromversorgung einen Pluspol der Stromversorgung bereitgestellt für einen ersten Kontakt und einen Minuspol der Stromversorgung bereitgestellt für einen zweiten Kontakt umfasst; und
wobei die zweite Polarität der Stromversorgung einen Minuspol der Stromversorgung bereitgestellt für den ersten Kontakt und einen Pluspol der Stromversorgung bereitgestellt für den zweiten Kontakt umfasst.

3. Die Computervorrichtung (100) nach Anspruch 2, ferner umfassend:
eine Sperrspannungsschutzschaltung (116), die konfiguriert ist, um die Computervorrichtung (100) vor Beschädigung aufgrund einer Spannung der zweiten Polarität zu schützen.

4. Die Computervorrichtung (100) nach einem der Ansprüche 1 bis 3,
wobei die Ausnahmeverarbeitung Herunterfahren der Computervorrichtung (100) oder Neustarten der Computervorrichtung (100) umfasst; und
wobei gegebenenfalls die Ausnahmeschaltung (110) eine Verzögerungsschaltung umfasst, die konfiguriert ist, um die Ausnahmeverarbeitung um eine vorbestimmte Zeitdauer zu verzögern.

5. Die Computervorrichtung (100) nach einem der Ansprüche 1 bis 4,
wobei der Stromversorgungsstecker (104) eine Vielzahl an Kontakten umfasst.

6. Die Computervorrichtung (100) nach einem der Ansprüche 1 bis 5, ferner umfassend:
einen Prozessor (118);
wobei die Ausnahmeverarbeitung ein Zurücksetzen des Prozessors (118) umfasst.

7. Eine Stromversorgungsvorrichtung (122), umfassend:
einen Leistungsausgabesteckverbinder (124), der mit Ladestiften einer Computervorrichtung (100) verbunden werden kann; und
einen Schalter (126), der konfiguriert ist, um umzuschalten zwischen einem ersten Zustand, von einer ersten Zustandsgruppe, in dem der Leistungsausgabesteckverbinder eine Stromquelle mit Ladestiften der Computervorrichtung (100) zum Laden der Computervorrichtung (100) verbindet und einem zweiten Zustand, von einer zweiten Zustandsgruppe, in dem der Schalter (126) den Leistungsausgabesteckverbinder (124) von den Ladestiften trennt und die Ladestifte kurzschließt, um die Ausnahmeverarbeitung in der Computervorrichtung (100) einzuleiten;
wobei der Schalter (126) ein leitendes Element umfasst, wobei der Schalter (126) die Ladestifte kurzschließt, indem das leitende Element zwischen den Ladestiften angeordnet wird.

8. Die Stromversorgungsvorrichtung (122) nach Anspruch 7,
wobei der Leistungsausgabesteckverbinder (124) konfiguriert ist, um eine Spannung einer ersten Polarität in einem weiteren Zustand von der ersten Zustandsgruppe auszugeben und eine Spannung einer zweiten Polarität in einem weiteren Zustand von der zweiten Zustandsgruppe auszugeben;
wobei der Leistungsausgabesteckverbinder (124) einen ersten Kontakt und einen zweiten Kontakt umfasst;
wobei die Spannung der ersten Polarität einen Pluspol am ersten Kontakt und einen Minuspol am zweiten Kontakt umfasst; und
wobei die Spannung der zweiten Polarität einen Minuspol am ersten Kontakt und einen Minuspol am zweiten Kontakt umfasst.

9. Ein Verfahren zum Steuern einer Computervorrichtung, das Verfahren umfassend:
Bestimmen einer Eingabe, die mit einem Stromversorgungsstecker der Computervorrichtung verbunden ist (132), wobei der Stromversorgungsstecker einen ersten Kontakt und einen zweiten Kontakt umfasst;
Laden der Batterie, wenn eine erste Eingabe bestimmt wird, die an den Stromversorgungsstecker angeschlossen ist (134);
Ausführen einer Ausnahmeverarbeitung, wenn eine zweite Eingabe bestimmt wird, die an den Stromversorgungsstecker angeschlossen ist (136);
wobei die erste Eingabe von einer ersten Eingabegruppe stammt und eine Spannung zum Laden der Batterie ist; und
wobei die zweite Eingabe von einer zweiten Eingabegruppe stammt und ein Kurzschluss zwischen dem ersten Kontakt und dem zweiten Kontakt ist; und
Bereitstellen der zweiten Eingabe durch Anordnen eines leitenden Elements zwischen dem ersten Kontakt und dem zweiten Kontakt.

10. Das Verfahren nach Anspruch 9,
wobei Bestimmen der Eingabe Bestimmen einer Polarität einer Stromversorgung verbunden mit dem Stromversorgungsstecker umfasst;
wobei die erste Eingabegruppe ferner eine Stromversorgung einer ersten Polarität umfasst und die zweite Eingabegruppe ferner eine Stromversorgung einer zweiten Polarität umfasst;
wobei die erste Polarität verglichen mit der zweiten Polarität invertiert ist;
wobei die erste Polarität der Stromversorgung einen Pluspol der Stromversorgung bereitgestellt für den ersten Kontakt und einen Minuspol der Stromversorgung bereitgestellt für den zweiten Kontakt umfasst; und
wobei die zweite Polarität der Stromversorgung einen Minuspol der Stromversorgung bereitgestellt für den ersten Kontakt und einen Pluspol der Stromversorgung bereitgestellt für den zweiten Kontakt umfasst.

11. Das Verfahren nach Anspruch 10, ferner umfassend:
Schützen der Computervorrichtung vor Beschädigung durch eine Spannung der zweiten Polarität.

12. Das Verfahren nach einem der Ansprüche 9 bis 11,
wobei die Ausnahmeverarbeitung Herunterfahren der Computervorrichtung oder Neustarten der Computervorrichtung umfasst;
wobei gegebenenfalls die Ausnahmeverarbeitung nach einer Verzögerung um eine vorbestimmte Zeitdauer ausgeführt wird.

13. Das Verfahren nach einem der Ansprüche 9 bis 12,
wobei die Ausnahmeverarbeitung ein Zurücksetzen eines Prozessors der Computervorrichtung umfasst.

14. Ein Verfahren zum Steuern einer Stromversorgungsvorrichtung, das Verfahren umfassend:
Umschalten, unter Verwendung eines Schalters, zwischen einem ersten Zustand, von einer ersten Zustandsgruppe, in der ein Leistungsausgabesteckverbinder der Stromversorgungsvorrichtung eine Stromquelle mit Ladestiften einer Computervorrichtung zum Laden der Computervorrichtung verbindet, und einem zweiten Zustand, von einer zweiten Zustandsgruppe, in der der Schalter den Leistungsausgabesteckverbinder von den Ladestiften trennt und die Ladestifte mit einem leitenden Element des Schalters kurzschließt, um die Ausnahmeverarbeitung in der Computervorrichtung zu initiieren.

15. Das Verfahren nach Anspruch 14,
wobei der Leistungsausgabesteckverbinder eine Spannung einer ersten Polarität in einem weiteren Zustand von der ersten Zustandsgruppe ausgibt und eine Spannung einer zweiten Polarität in einem weiteren Zustand von der zweiten Zustandsgruppe ausgibt;
wobei der Leistungsausgabesteckverbinder einen ersten Kontakt und einen zweiten Kontakt umfasst;
wobei die Spannung der ersten Polarität einen Pluspol am ersten Kontakt und einen Minuspol am zweiten Kontakt umfasst; und
wobei die Spannung der zweiten Polarität einen Minuspol am ersten Kontakt und einen Minuspol am zweiten Kontakt umfasst.

## Revendications

1. Un dispositif informatique (100) comprenant :
une batterie (102) ;
un connecteur d'alimentation électrique (104) comprenant un premier contact et un deuxième contact ;
un circuit de détermination de connexion (106) configuré pour déterminer une entrée connectée au connecteur d'alimentation électrique (104) ;
un circuit de charge (108) configuré pour charger la batterie (102) si le circuit de détermination de connexion (106) détermine une première entrée connectée au connecteur d'alimentation électrique (104) ; et
un circuit d'exception (110) configuré pour ordonner au dispositif informatique (100) d'effectuer un traitement d'exception si le circuit de détermination de connexion (106) détermine une deuxième entrée connectée au connecteur d'alimentation électrique (104) ;
dans lequel la première entrée appartient à un premier groupe d'entrées et constitue une tension pour charger la batterie (102) ; et
dans lequel la deuxième entrée appartient à un deuxième groupe d'entrées et constitue un court-circuit provoqué par un élément conducteur agencé entre le premier contact et le deuxième contact.

2. Le dispositif informatique (100) de la revendication 1,
dans lequel le circuit de détermination de connexion (106) comprend un circuit de détermination de polarité de tension configuré pour déterminer une polarité d'une alimentation électrique connectée au connecteur d'alimentation électrique (104) ;
dans lequel le premier groupe d'entrées comprend en outre une alimentation électrique d'une première polarité, et
le deuxième groupe d'entrées comprend en outre une alimentation électrique d'une deuxième polarité ;
dans lequel la première polarité est inversée par rapport à la deuxième polarité ;
dans lequel la première polarité de l'alimentation électrique comprend un pôle plus de l'alimentation électrique situé au niveau d'un premier contact et un pôle négatif de l'alimentation électrique situé au niveau d'un deuxième contact ; et
dans lequel la deuxième polarité de l'alimentation électrique comprend un pôle négatif de l'alimentation électrique situé au niveau du premier contact et un pôle plus de l'alimentation électrique situé au niveau du deuxième contact.

3. Le dispositif informatique (100) de la revendication 2, comprenant en outre :
un circuit de protection contre la tension inverse (116) configuré pour protéger le dispositif informatique (100) contre les dommages causés par une tension de la deuxième polarité.

4. Le dispositif informatique (100) de l'une quelconque des revendications 1 à 3,
dans lequel le traitement d'exception comprend l'arrêt du dispositif informatique ou le redémarrage du dispositif informatique (100) ; et
dans lequel le circuit d'exception (110) comprend éventuellement un circuit de retardement configuré pour retarder le traitement d'exception d'une durée prédéterminée.

5. Le dispositif informatique (100) de l'une quelconque des revendications 1 à 4,
dans lequel le connecteur d'alimentation électrique (104) comprend une pluralité de contacts.

6. Le dispositif informatique (100) de l'une quelconque des revendications 1 à 5, comprenant en outre :
un processeur (118) ;
dans lequel le traitement d'exception comprend une réinitialisation du processeur (118).

7. Un dispositif d'alimentation électrique (122) comprenant :
un connecteur de sortie d'alimentation (124) pouvant être connecté à des broches de charge d'un dispositif informatique (100) ; et
un commutateur (126) configuré pour passer d'un premier état, appartenant à un premier groupe d'états, dans lequel le connecteur de sortie d'alimentation
connecte une source d'alimentation à des broches de charge du dispositif informatique (100) pour charger le dispositif informatique (100), à un deuxième état, appartenant à un deuxième groupe d'états, dans lequel le commutateur (126)
déconnecte le connecteur de sortie d'alimentation (124) des broches de charge et court-circuite les broches de charge pour déclencher un traitement d'exception dans le dispositif informatique (100) ;
dans lequel le commutateur (126) comprend un élément conducteur, dans lequel le commutateur (126) court-circuite les broches de charge en agençant l'élément conducteur entre les broches de charge.

8. Le dispositif d'alimentation électrique (122) de la revendication 7,
dans lequel le connecteur de sortie d'alimentation (124) est configuré pour délivrer une tension d'une première polarité dans un autre état du premier groupe d'états et pour délivrer une tension d'une deuxième polarité dans un autre état du deuxième groupe d'états ;
dans lequel le connecteur de sortie d'alimentation (124) comprend un premier contact et un deuxième contact ;
dans lequel la tension de la première polarité comprend un pôle plus au niveau du premier contact et un pôle négatif au niveau du deuxième contact ; et
dans lequel la tension de la deuxième polarité comprend un pôle négatif au niveau du premier contact et un pôle négatif au niveau du deuxième contact.

9. Un procédé de commande d'un dispositif informatique, le procédé comprenant :
la détermination d'une entrée connectée à un connecteur d'alimentation électrique du dispositif informatique (132), dans lequel le connecteur d'alimentation électrique comprend un premier contact et un deuxième contact ;
la charge de la batterie si une première entrée connectée au connecteur d'alimentation électrique est déterminée (134) ;
l'exécution d'un traitement d'exception si une deuxième entrée connectée au connecteur d'alimentation électrique est déterminée (136) ;
dans lequel la première entrée appartient à un premier groupe d'entrées et constitue une tension pour charger la batterie ; et
dans lequel la deuxième entrée appartient à un deuxième groupe d'entrées et constitue un court-circuit entre le premier contact et le deuxième contact ; et la création de la deuxième entrée en agençant un élément conducteur entre le premier contact et le deuxième contact.

10. Le procédé de la revendication 9,
dans lequel la détermination de l'entrée comprend la détermination d'une polarité d'une alimentation électrique connectée au connecteur d'alimentation électrique ;
dans lequel le premier groupe d'entrées comprend en outre une alimentation électrique d'une première polarité, et
le deuxième groupe d'entrées comprend en outre une alimentation électrique d'une deuxième polarité ;
dans lequel la première polarité est inversée par rapport à la deuxième polarité ;
dans lequel la première polarité de l'alimentation électrique comprend un pôle plus de l'alimentation électrique situé au niveau du premier contact et un pôle négatif de l'alimentation électrique situé au niveau du deuxième contact ; et
dans lequel la deuxième polarité de l'alimentation électrique comprend un pôle négatif de l'alimentation électrique situé au niveau du premier contact et un pôle plus de l'alimentation électrique situé au niveau du deuxième contact.

11. Le procédé de la revendication 10, comprenant en outre :
la protection du dispositif informatique contre les dommages causés par une tension de la deuxième polarité.

12. Le procédé de l'une quelconque des revendications 9 à 11,
dans lequel le traitement d'exception comprend l'arrêt du dispositif informatique ou le redémarrage du dispositif informatique ;
dans lequel le traitement d'exception est éventuellement exécuté après un retard d'une durée prédéterminée.

13. Le procédé de l'une quelconque des revendications 9 à 12,
dans lequel le traitement d'exception comprend une réinitialisation d'un processeur du dispositif informatique.

14. Un procédé de commande d'un dispositif d'alimentation électrique, le procédé comprenant :
le passage, par l'intermédiaire d'un commutateur, d'un premier état, appartenant à un premier groupe d'états,
dans lequel un connecteur de sortie d'alimentation du dispositif d'alimentation électrique connecte une source d'alimentation à des broches de charge d'un dispositif informatique pour charger le dispositif informatique, à un deuxième état, appartenant à un deuxième groupe d'états,
dans lequel le commutateur déconnecte le connecteur de sortie d'alimentation des broches de charge et court-circuite les broches de charge avec un élément conducteur du commutateur pour déclencher un traitement d'exception dans le dispositif informatique.

15. Le procédé de la revendication 14,
dans lequel le connecteur de sortie d'alimentation délivre une tension d'une première polarité dans un autre état du premier groupe d'états et délivre une tension d'une deuxième polarité dans un autre état du deuxième groupe d'états ;
dans lequel le connecteur de sortie d'alimentation comprend un premier contact et un deuxième contact ;
dans lequel la tension de la première polarité comprend un pôle plus au niveau du premier contact et un pôle négatif au niveau du deuxième contact ; et
dans lequel la tension de la deuxième polarité comprend un pôle négatif au niveau du premier
contact et un pôle négatif au niveau du deuxième contact.
